# FASCICULE DE BREVET EUROPEEN

(11) **EP 2 367 704 B1**
(45) Date de publication et mention de la délivrance du brevet: **13.09.2017**
(21) Numéro de dépôt: 09751944.1
(22) Date de dépôt: 17.11.2009
(51) Int. Cl.: B60L 11/18, H02J 7/02

(54) **DISPOSITIF ELECTRIQUE COMBINE D'ALIMENTATION ET DE CHARGE**
KOMBINIERTE ELEKTRISCHE VORRICHTUNG ZUM ANTREIBEN UND LADEN
COMBINED ELECTRIC DEVICE FOR POWERING AND CHARGING

(30) Priorité: 18.11.2008 FR 0806455
(43) Date de publication de la demande: 28.09.2011
(73) Titulaire: Valeo Systèmes de Contrôle Moteur, 95800 Cergy (FR)
(72) Inventeur: DE SOUSA, Luis, F-78600 Maisons Laffitte (FR); BOUCHEZ, Boris, 95800 Cergy (FR)
(74) Mandataire: Argyma
(86) Numéro de dépôt international: PCT/EP2009/065334
(87) Numéro de publication internationale: WO 2010/057892

(56) Documents cités:
- EP-A- 0 603 778
- FR-A- 2 865 868
- HAIWEN LIU ET AL: "Comparison of fundamental frequency and PWM methods applied on a hybrid cascaded multilevel inverter" INDUSTRIAL ELECTRONICS, 2008. IECON 2008. 34TH ANNUAL CONFERENCE OF IEEE, IEEE, PISCATAWAY, NJ, USA, 10 novembre 2008 (2008-11-10), pages 3233-3237, XP031410944 ISBN: 978-1-4244-1767-4
- AZONGHA S ET AL: "Utilizing ultra-capacitor energy storage in motor drives with cascaded multilevel inverters" INDUSTRIAL ELECTRONICS, 2008. IECON 2008. 34TH ANNUAL CONFERENCE OF IEEE, IEEE, PISCATAWAY, NJ, USA, 10 novembre 2008 (2008-11-10), pages 2253-2258, XP031410788 ISBN: 978-1-4244-1767-4
- SUL S-K ET AL: "AN INTEGRAL BATTERY CHARGER FOR FOUR-WHEEL DRIVE ELECTRIC VEHICLE" IEEE TRANSACTIONS ON INDUSTRY APPLICATIONS, IEEE SERVICE CENTER, PISCATAWAY, NJ, US, vol. 31, no. 5, 1 septembre 1995 (1995-09-01), pages 1096-1099, XP000535588 ISSN: 0093-9994

## Description

La présente invention concerne un dispositif électrique combiné d'alimentation et de charge ainsi qu'un procédé associé et se situe dans le domaine des moteurs ou alternateurs alimentés par des batteries rechargeables.

L'invention trouvera avantageusement application dans le domaine des automobiles électriques dans lesquelles les batteries peuvent alimenter le moteur via un onduleur et être rechargées lorsque l'automobile est à l'arrêt.

Toutefois bien que particulièrement prévus pour une telle application le dispositif et le procédé associé pourront être utilisés dans d'autres domaines et notamment dans des dispositifs de génération d'énergie de type éolien ou hydraulique.

### ARRIERE PLAN DE L'INVENTION

Classiquement un véhicule électrique est équipé de batteries haute tension délivrant un courant continu à un onduleur qui transforme ce courant continu en un courant alternatif permettant d'alimenter un moteur électrique, ce dernier assurant la mise en mouvement du véhicule.

De manière à assurer la recharge de ces batteries haute tension il est connu d'équiper le véhicule d'un dispositif de charge embarqué comportant essentiellement un convertisseur alternatif continu permettant de redresser la puissance alternative du réseau électrique pour charger les batteries. Le dispositif comprend en outre avantageusement un convertisseur continu-continu assurant l'adaptation du niveau de tension du réseau à celui des batteries.

Les composants électroniques de la chaîne d'alimentation d'une part et de la chaîne de charge d'autre part sont coûteux. Par ailleurs l'alimentation du moteur et la charge des batteries s'effectuent à des phases différentes aussi il a été proposé, dans les demandes EP 0 603 778 et WO97/08009, de réutiliser une partie du moteur et des composants servant à son alimentation pour réaliser le dispositif de charge des batteries.

A cet effet, le dispositif de charge des batteries utilise l'onduleur pour former un convertisseur alternatif continu ainsi que les bobinages du moteur pour former les inductances. Le passage du mode d'alimentation du moteur à celui de la charge des batteries est assuré par des contacteurs de puissance en déconnectant le neutre.

L'utilisation des connecteurs de puissance est toutefois problématique dans le sens où, assurant le passage des courants de la machine électrique, ils doivent être surdimensionnés. En effet à titre d'exemple un système de traction de 50kW alimenté par des batteries de 345V nominal peut nécessiter un courant de près de 350A efficace pour assurer un couple maximum. En cas de blocage du rotor ce courant peut atteindre 500 A crête en supportant des vibrations et des chocs auxquels peuvent être soumis les automobiles selon les normes en

Le document SUL S-K ET AL: "AN INTEGRAL BATTERY CHARGER FOR FOUR-WHEEL DRIVE ELECTRIC VEHICLE",IEEE TRANSACTIONS ON INDUSTRY APPLICATIONS, IEEE SERVICE CENTER, PISCATAWAY, NJ, US, vol. 31, no. 5, 1 septembre 1995 (1995-09-01), pages 1096-1099, XP000535588,ISSN: 0093-9994, décrit un dispositif selon le préambule de la revendication 1.

### OBJET DE L'INVENTION

La présente invention a pour but de proposer un dispositif et un procédé permettant l'alimentation du moteur et la charge de la batterie en utilisant des éléments du moteur et de l'onduleur et tel que le dispositif présente une structure permettant de s'affranchir des contacteurs de puissance pour le passage entre les modes d'alimentation et de charge.

### RESUME DE L'INVENTION

A cet effet le dispositif électrique combiné d'alimentation et de charge, comporte un moteur à courant alternatif, un onduleur et des moyens d'accumulation, le dispositif comporte en outre des moyens de commutation permettant soit d'autoriser l'alimentation du moteur soit d'autoriser la charge des moyens d'accumulation par l'onduleur. Les moyens de commutation sont intégrés à l'onduleur et comprennent au moins une structure de pont en H, pour chaque phase du moteur, permettant de conserver la connexion du neutre de chaque phase du moteur lors de la charge des moyens d'accumulation.

Le dispositif électrique peut en outre comporter un convertisseur DC/DC (continu-continu) entre les ponts en H et les moyens d'accumulation permettant d'adapter la tension du réseau extérieur d'alimentation aux caractéristiques des moyens d'accumulation.

Si le moteur est un moteur triphasé, les moyens de commutation comportent avantageusement trois ponts en H.

Des moyens de verrouillage permettant d'empêcher l'accès à la prise électrique de connexion au réseau extérieur en cas de mise sous tension du dispositif peuvent être prévus.

La prise électrique peut également assurer une mise à la terre du dispositif électrique.

Un autre objet de l'invention vise un procédé combiné d'alimentation et de charge pour la mise en oeuvre du dispositif décrit ci-dessus, comportant une étape de commande des moyens de commutation dudit au moins un pont en H permettant de passer d'un mode alimentation du moteur à un mode de charge des moyens d'accumulation et inversement.

Dans le cas d'un moteur triphasé, le procédé peut comporter une étape de commande d'inversion, en cas de perte d'une phase du moteur, d'une des deux autres phases de sorte à générer un champ tournant unique à amplitude constante.

### BREVE DESCRIPTION DES DESSINS

La présente invention sera mieux comprise à la lecture d'un exemple détaillé de réalisation en référence aux dessins annexés, fournis à titre d'exemple non limitatif, parmi lesquels :
- la figure 1 représente de manière schématique un exemple de réalisation du dispositif avec un réseau électrique triphasé dans un moteur triphasé conforme à l'invention ;
- la figure 2 représente de manière schématique un exemple de réalisation du branchement d'un réseau monophasé dans un onduleur triphasé ;
- la figure 3 représente de manière schématique un second exemple de réalisation du branchement d'un réseau monophasé dans un onduleur triphasé.

### DESCRIPTION DETAILLEE DE L'INVENTION

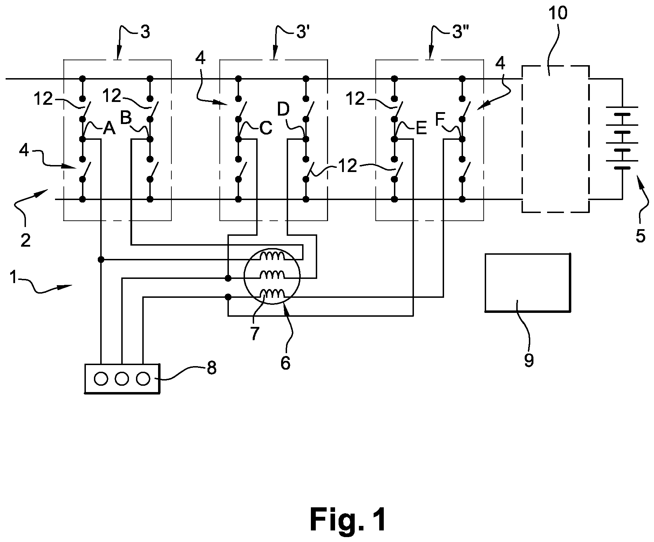

En se reportant principalement à la figure 1 on voit représenté un dispositif 1 selon l'invention avec un onduleur 2 et des moyens de commutation 4 comportant trois ponts en H, 3,3',3''.

Ce dispositif 1 est prévu pour fonctionner selon deux modes :
- un mode d'alimentation dans lequel il assure l'alimentation en courant alternatif d'un moteur 6 à partir d'une batterie 5 ;
- un mode de charge dans lequel il assure la charge de la batterie 5 à partir du réseau électrique raccordé sur une connectique 8, en employant les enroulements 7 du moteur comme inductance.

Chaque pont 3,3',3'' comporte quatre interrupteurs 12 répartis sur des bras référencés de A à F. Un avantage du pont en H par rapport au pont triphasé classique est que son utilisation double la tension appliquée aux phases du moteur pour une même tension, de la sorte, bien que comportant un doublement du nombre d'interrupteurs 12, la surface de silicium utilisée sera identique pour le pont en H à celle du pont triphasé classique ; puisqu'en effet les courants de phase sont divisés par deux.

L'utilisation des ponts en H permet en outre de réduire les pertes dues aux commutations.

Le dispositif 1 comprend en outre des moyens d'accumulation 5, un moteur 6, représenté partiellement, dont les enroulements 7 font office d'inductance.

Le dispositif 1 comporte également une connectique 8 permettant le raccordement à la prise du réseau électrique triphasé. Cette connectique comporte des moyens de verrouillage, non représentés dans les figures annexées, permettant d'empêcher l'accès à la prise électrique en cas de mise sous tension du dispositif 1 lors du mode de charge. La connectique 8 est de plus associée à des seconds moyens de verrouillage (non représentés) empêchant à l'utilisateur l'accès aux conducteurs (qui sont alors sous tension) lors du mode d'alimentation. La prise assure de plus une mise à la terre (non représentée) du dispositif 1. La connectique 8 comporte avantageusement des filtres de compatibilité électromagnétique et des protections (non représentés) classiques pour tout appareil destiné à être relié au réseau électrique.

Le passage du mode d'alimentation au mode de charge est géré par un circuit de commande 9 qui pilote notamment les interrupteurs des bras A à F (dans la figure 1, la liaison entre le circuit de commande 9 et les interrupteurs n'a pas été représentée pour faciliter la lecture de la figure). En mode alimentation le circuit de commande 9 commande l'ensemble des bras A, B, C, D, E et F générant des courants triphasés de manière analogue à une commande standard. En mode de charge seuls les bras B, D et F sont commandés réalisant, avec les inductances 7 du moteur 6 de la machine électrique, un élévateur de tension.

Plus précisément, et dans le présent exemple, le circuit de commande 9 pilote les bras A à F de la manière suivante :
- en mode d'alimentation, chacun des ponts en H est commandé de sorte à permettre la circulation d'un courant alternatif dans la phase correspondante du moteur. Les courants alternatifs circulant dans les trois phases du moteur sont coordonnés de manière classique pour que le moteur tourne. Les interrupteurs 12 (qui sont dans le présent exemple des transistors de puissance) des branches A et B peuvent être pilotés selon une commande PWM (Pulse Width Modulation, en français : modulation à largeur d'impulsions) sinusoïdale classique. Les deux autres ponts en H sont pilotés de la même manière mais en déphasage les uns des autres, de préférence à 120° dans le cas d'un moteur triphasé ;
- en mode de charge triphasé, les deux interrupteurs de chacun des bras A, C et E sont ouverts, tandis que les interrupteurs des bras B, D et F sont pilotés selon une commande alternative classique pour un chargeur triphasé de sorte que chaque inductance 7 soit traversée par un courant alternatif et que la fonction PFC (Power Factor Correction, en français : correction de facteur de puissance) soit réalisée sur l'ensemble des phases.

Le circuit de commande 9 peut également permettre un fonctionnement en mode dégradé du moteur 6. En effet en cas de perte de phase suite à une défaillance du moteur 6 ou de l'onduleur 2, le circuit de commande 9 inverse la commande d'une des deux phases du moteur 6 en fonctionnement. Cette commande permet de continuer à générer un champ tournant unique d'amplitude constante ne générant pas d'ondulation de couple, ce qui est impossible avec un dispositif triphasé classique dans lequel la perte d'une phase se traduit pas des fortes ondulations de couple.

En se reportant à la figure 1, on voit que le dispositif 1 comporte également un convertisseur DC/DC 10 disposé entre les ponts en H et les moyens d'accumulation 5. L'utilisation d'un convertisseur DC/DC 10 permet d'adapter les tensions et par conséquent d'optimiser le dimensionnement de l'onduleur sans dégrader le rendement. En effet la tension des moyens d'accumulation 5 varie avec leurs charges, les variations allant du simple au double, l'utilisation d'un convertisseur DC/DC 10 permet de dimensionner l'onduleur 2 pour une tension plus haute, ce dernier devant laisser passer deux fois moins de courant.

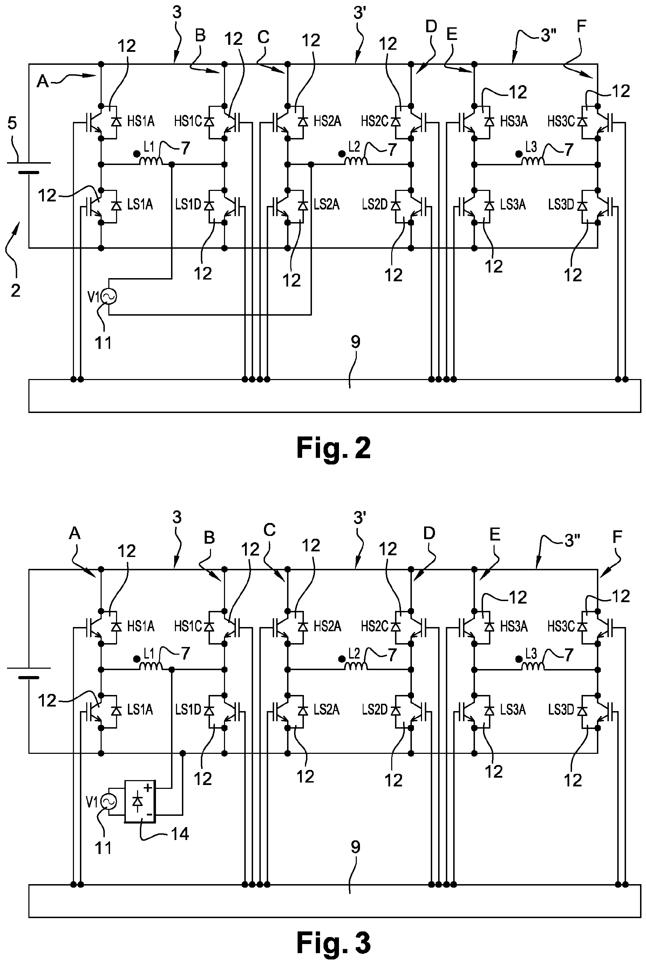

A la figure 2 est représenté un onduleur triphasé 2 avec un chargeur monophasé.

Dans le présent exemple, le circuit de commande 9 peut piloter les bras A à F de la manière suivante :
- en mode d'alimentation, même commande que pour le mode d'alimentation du dispositif de la figure 1 (voir ci-dessus) ;
- en mode de charge, les bras B, C, E et F ne sont pas commandés, c'est-à-dire que leurs interrupteurs 12 sont tous ouverts ; et les interrupteurs des bras A et D sont pilotés selon une commande alternative classique pour un chargeur monophasé de sorte que chaque inductance 7 soit traversée par un courant alternatif redressé et que la fonction PFC soit réalisée sur la phase concernée.

A la figure 3 est également représenté un onduleur triphasé avec un chargeur monophasé. Dans cette deuxième solution le réseau électrique 11 est connecté sur l'onduleur 2 via un pont redresseur. Le réseau électrique 11 est redressé par un pont de diode monophasé 13.

Dans cet exemple, le circuit de commande 9 peut piloter les bras A à F de la manière suivante :
- en mode d'alimentation, même commande que pour le mode d'alimentation du dispositif de la figure 1 (voir ci-dessus) ;
- en mode de charge, les bras B, C, D, E, et F ne sont pas commandés et les interrupteurs 12 du bras A sont quant à eux pilotés selon une commande alternative classique pour un chargeur monophasé de sorte que chaque inductance 7 soit traversée par un courant alternatif redressé et que la fonction PFC soit réalisée sur la phase concernée.

D'autres caractéristiques de l'invention auraient également pu être envisagées sans pour autant sortir du cadre de l'invention définie par les revendications ci-après. Notamment le dispositif décrit ci-dessus est généralisable à un système polyphasé avec une structure de pont en H pour chaque phase du moteur 6.

## Revendications

1. Dispositif électrique combiné d'alimentation et de charge, comportant un moteur (6) à courant alternatif, un onduleur (2) et des moyens d'accumulation (5), le dispositif comportant des moyens de commutation (4) permettant soit d'autoriser l'alimentation du moteur soit d'autoriser la charge des moyens d'accumulation (5) par l'onduleur (2) à partir d'un réseau électrique (11) en employant les enroulements (7) du moteur (6) comme inductance, ledit dispositif électrique étant **caractérisé en ce que** les moyens de commutation (4) sont intégrés à l'onduleur (2) et comprennent au moins une structure de pont en H (3,3',3'') pour chaque phase du moteur (6).

2. Dispositif électrique selon la revendication 1 comportant un convertisseur DC/DC (10) entre les ponts en H (3,3',3'') et les moyens d'accumulation (5) permettant d'adapter la tension du réseau extérieur d'alimentation (11) aux caractéristiques des moyens d'accumulation (5).

3. Dispositif électrique selon l'une des revendications 1 à 2, dans lequel le moteur (6) est un moteur triphasé, les moyens de commutation (4) comportant trois ponts en H.

4. Dispositif électrique selon l'une des revendications 1 à 3, comportant des moyens de verrouillage permettant d'empêcher l'accès à une prise électrique de connexion au réseau extérieur (11) en cas de mise sous tension du dispositif.

5. Dispositif électrique selon l'une des revendications 1 à 4 dans lequel une prise électrique assure une mise à la terre du dispositif électrique.

6. Procédé combiné d'alimentation et de charge pour la mise en oeuvre du dispositif selon l'une quelconque des revendications précédentes comportent une étape de commande des moyens de commutation (4) dudit au moins un pont en H (3) permettant de passer d'un mode alimentation du moteur (6) à un mode de charge des moyens d'accumulation (5) par l'onduleur (2) à partir d'un réseau électrique (11) en employant les enroulements (7) du moteur (6) du dispositif comme inductance, et inversement.

7. Procédé combiné d'alimentation et de charge pour la mise en oeuvre d'un dispositif équipé d'un moteur (6) triphasé selon la revendication 6 précédente comportant une étape de commande d'inversion, en cas de perte d'une phase du moteur (6), d'une des deux autres phases permettant de générer un champ tournant unique à amplitude constante.

## Patentansprüche

1. Kombinierte elektrische Vorrichtung für die Versorgung und Aufladung, die einen Wechselstrommotor (6), einen Wechselrichter (2) und Akkumulationsmittel (5) umfasst, wobei die Vorrichtung Kommutationsmittel (4) umfasst, die es ermöglichen, entweder die Versorgung des Motors zu autorisieren, oder die Aufladung der Akkumulationsmittel (5) durch den Wechselrichter (2) ausgehend von einem elektrischen Netz (11) zu autorisieren, indem Wicklungen (7) des Motors (6) als Induktivität verwendet werden, wobei die elektrische Vorrichtung **dadurch gekennzeichnet ist, dass** die Kommutationsmittel (4) in dem Wechselrichter (2) integriert sind und zumindest eine Struktur einer H-Brücke (3,3',3") für jede Phase des Motors (6) umfassen.

2. Elektrische Vorrichtung nach Anspruch 1, die einen DC / DC-Wandler (10) zwischen den H-Brücken (3, 3', 3") und den Akkumulationsmitteln (5) umfasst, das es ermöglicht, die Spannung des externen Versorgungsnetzes (11) an die Eigenschaften der Akkumulationsmittel (5) anzupassen.

3. Elektrische Vorrichtung nach einem der Ansprüche 1 bis 2, wobei der Motor (6) ein Dreiphasenmotor ist, wobei die Kommutationsmittel (4) drei H-Brücken aufweisen.

4. Elektrische Vorrichtung nach einem der Ansprüche 1 bis 3, die Verriegelungsmittel aufweist, die es ermöglichen, den Zugang zu einem Stromanschluss zur Verbindung des externen Netzes (11) in dem Fall zu verhindern, dass die Vorrichtung unter Spannung gesetzt ist.

5. Elektrische Vorrichtung nach einem der Ansprüche 1 bis 4, wobei ein Stromanschluss eine Erdung der elektrischen Vorrichtung sicherstellt.

6. Verfahren zur kombinierten Versorgung und Aufladung zum Einsatz der Vorrichtung nach einem der vorstehenden Ansprüche, die einen Schritt zur Steuerung der Kommutationsmittel (4) von der mindestens einen H-Brücke (3) umfasst, der es ermöglicht, von einem Versorgungsmodus des Motors (6) zu einem Aufladungsmodus der Akkumulationsmittel (5) durch den Wechselrichter (2) ausgehend von einem elektrischen Netz (11) überzugehen, indem die Wicklungen (7) des Motors (6) als Induktivität eingesetzt werden, und umgekehrt.

7. Verfahren zur kombinierten Versorgung und Aufladung zum Einsatz einer Vorrichtung, die mit einem dreiphasigen Motor (6) gemäß dem vorstehenden Anspruch 6 ausgestattet ist, wobei es einen Schritt zur Steuerung der Kommutation von einer der anderen zwei Phasen im Falle eines Verlustes einer Phase des Motors (6) aufweist, was es ermöglicht, ein einziges Drehfeld mit konstanter Amplitude zu erzeugen.

## Claims

1. Combined electric device for power supply and charging, comprising an AC motor (6), an inverter (2) and accumulation means (5), the device comprising switching means (4) allowing either the authorisation of the supply of power to the motor or the authorisation of the charging of the accumulation means (5) by the inverter (2) via an electric network (11) by using the windings (7) of the motor (6) as an inductor, said electric device being **characterised in that** the switching means (4) are integrated into the inverter (2) and comprise at least one H-bridge structure (3, 3', 3") for each phase of the motor (6).

2. Electric device according to claim 1, comprising a DC/DC converter (10) between the H- bridges (3, 3', 3") and the accumulation means (5) that allows the voltage of the external power supply network (11) to be adjusted to the characteristics of the accumulation means (5).

3. Electric device according to one of claims 1 and 2, wherein the motor (6) is a three-phase motor, the switching means (4) comprising three H-bridges.

4. Electric device according to one of claims 1 to 3, comprising locking means allowing access to an electric socket for connection to the external network (11) to be prevented in case the device is live.

5. Electric device according to one of claims 1 to 4, wherein an electric socket provides grounding of the electric device.

6. Combined method for power supply and charging for the implementation of the device according to any one of the previous claims, comprising a step of controlling the switching means (4) of said at least one H-bridge (3) that allows a switch from a mode of supplying power to the motor (6) to a mode of charging of the accumulation means (5) by the inverter (2) via an electric network (11) by using the windings (7) of the motor (6) of the device as an inductor, and vice versa.

7. Combined method for supplying power and charging for the implementation of a device provided with a three-phase motor (6) according to the preceding claim 6, comprising a step of ordering inversion, if one phase of the motor (6) is lost, of one of the other two phases allowing a single rotating field having a constant amplitude to be generated.
